# EUROPEAN PATENT SPECIFICATION

(11) **EP 3 042 705 B1**
(45) Date of publication and mention of the grant of the patent: **23.05.2018**
(21) Application number: 14841017.8
(22) Date of filing: 01.09.2014
(51) Int. Cl.: B01D 19/02, B01D 19/00

(54) **DEFOAMING APPARATUS FOR HIGH-VISCOSITY PURE-CHITOSAN SPINNING SOLUTION**
ENTSCHÄUMUNGSVORRICHTUNG FÜR HOCHVISKOSE SPINNLÖSUNG AUS REINEM CHITOSAN
APPAREIL ANTI-MOUSSE POUR SOLUTION DE FILAGE DE CHITOSAN PUR À HAUTE VISCOSITÉ

(30) Priority: 02.09.2013 CN 201310391878
(43) Date of publication of application: 13.07.2016
(73) Proprietor: Hismer Bio-technology Co., Ltd., Taian City, Shandong 271400 (CN)
(72) Inventor: ZHOU, Jiacun, Taian Shandong 271400 (CN); HU, Guangmin, Taian Shandong 271400 (CN)
(74) Representative: Hanna Moore + Curley
(86) International application number: PCT/CN2014/085697
(87) International publication number: WO 2015/027958

(56) References cited:
- CN-A- 101 797 449
- CN-U- 201 445 833
- CN-U- 203 494 229
- GB-A- 2 079 616
- JP-A- 2003 103 110
- JP-A- 2006 061 780
- US-A- 4 272 258
- US-A- 6 145 815

## Description

### Technical Field

The present invention relates to a degassing device for high-viscosity spinning solutions, in particular to a degassing device for high-viscosity pure-chitosan spinning solutions.

### Background Art

Pure chitosan fibers refer to the fibers made of extracts from shells of shrimps and crabs, and have many advantages as compared with the conventional land natural fibers and synthetic fibers. On the one hand, pure chitosan fibers neither depend on petroleum nor compete against crops for the land, and serve as the third source of chemical fibers. On the other hand, the waste reutilization conforms to the trend of environmentally sustainable development. Furthermore, pure chitosan fibers have broad-spectrum antimicrobial activity, mildew resistance, excellent biocompatibility and no immunogenicity, and also have the effects of adsorption chelation, hemostasis, wound-healing and scar formation inhibition. Owing to these functions, pure chitosan fibers can be widely applied in the fields of aerospace, medical and health care, military and civil textiles and filter protection, have a good market prospect, and play a positive role in promoting human health.

Deacetylation and viscocity are two important quality indicators of chitosan. It is well known that the greater the molecular weight of chitosan, the higher the viscocity. The relation (Mark-Houwink) between viscocity and molecular weight is represented by the formula: [η] = kM^{α}(η: viscocity, mpa·s, K: constant, M: relative molecular mass, α: a numerical value related to molecular weight). It thus can be seen that the higher the viscocity of pure chitosan spinning solution, the greater the molecular weight, so that the pure chitosan fibers spun therefrom are better in dry-breaking strength, breaking elongation and spinnability. Accordingly, only high-viscocity pure chitosan spinning solution can meet the requirements for spinning of high-quality pure chitosan fibers. The desired viscocity of spinning solution for spinning of high-quality pure chitosan fibers is greater than 450,000 mpa·s, which is almost 10 times the viscocity of the common spinning solution, the conventional degassing process has an extremely-low production efficiency and fails to realize industrial production.

Upon decalcification and deproteinization, a great deal of cavities are generated in the structure of flake chitosan, and these cavities are filled with air, flake chitosan itself is formed by lamination of two or more layers, with a great deal of air in the gaps. During the dissolution of chitosan, the air in the cavities and gaps are entrained in the chitosan solution and can not escape. In addition, a large amount of air bubbles are generated during stir-dissolution, filtration and transport of the chitosan spinning solution, and enter the degassing vessel.

In the wet-spinning process, the spinning solution should be degassed before being sprayed into the solidification bath from the spinning plate, if there are air bubbles in the spinning solution in the solidification bath, the air bubbles escape to cause filament breakage, therefore the degassing treatment must be performed before spinning. Since the viscocity of the pure chitosan spinning solution is greater than 450,000 mpa·s, which is almost 10 times the viscocity of the common spinning solution, the conventional degassing process has an extremely-low production efficiency and fails to realize industrial production.

The state of the art is represented by the following patent specifications: GB 2 079 616; US 4 273 258 and US 6 145 815.

### Technical Problems

The present invention solves the technical problems in the prior art, and provides a degassing device with high degassing efficiency and good degassing effect, and the degassing device can completely remove air bubbles in one step and is applicable to spinning solutions of a wide range of viscocity.

### Solutions to the Problems

### Technical Schemes

The present invention adopts the technical scheme as follows:

a degassing device for high-viscosity pure-chitosan spinning solutions comprises a reaction vessel (1) and a stirring device (2), a feed port (3) being disposed at the upper part of the reaction vessel (1), and a discharge port (4) being disposed in the bottom center, and is characterized in that: a vacuum port (5) is formed at the upper part of the reaction vessel (1), an inner cylinder body (9) is fixedly disposed in the center position of the reaction vessel (1), the upper cylinder opening of the inner cylinder body (9) is closed and the lower cylinder opening is open, an umbrella-shaped dispersion plate (10) is fixedly disposed at the periphery of the upper half part of the inner cylinder body (9), a gap is formed between the outer edge of the umbrella-shaped dispersion plate (10) and the inner wall of the reaction vessel (1), small liquid outlet holes (11) are distributed on the part of the inner cylinder body (9) above the umbrella-shaped dispersion plate (10), the stirring device (2) comprises a stirring shaft (12) with a screw propeller (14) and a stirring power unit (13), the upper end of the stirring shaft (12) is mounted to the stirring power unit (13), the stirring shaft (12) passes through a mechanical sealing device (16) and enters the reaction vessel (1) with the lower end being fixed on a seat-mounted bearing (6), the stirring shaft (12) is superposed with the axial line of the inner cylinder body (9), and a gap is formed between the inner wall of the inner cylinder body (9) and the screw propeller (14).

An annular feed pipe (7) is fixedly disposed in the inner upper part of the reaction vessel (1), the annular feed pipe (7) communicates with the feed port (3), and small discharge holes (8) are distributed on the part below the horizontal central plane of the annular feed pipe (7).

The included angle of axial lines of the umbrella-shaped dispersion plate (10) and the inner cylinder body (9) is as follows: α=65°-80°.

The upper cylinder opening of the inner cylinder body (9) is closed by a round plate on which small liquid outlet holes (11) are distributed.

The stirring shaft (12) is aligned with the discharge port (4).

A sampling port (18) is formed at the lower part of the reaction vessel (1).

The annular feed pipe (7) is fixed by a push rod (20) which is fixed on the inner wall of the reaction vessel (1) and located above the umbrella-shaped dispersion plate, and the inner cylinder body (9) of the reaction vessel (1) is fixedly disposed in the center of the reaction vessel (1) by upper and lower support rods (22).

A stopper (19) is disposed in the reaction vessel (1), and a vacuum relief port (15), a vacuum meter (17), a view window (21), a manhole entrance (23), a compressed air outlet (24), a view mirror light (26), a view mirror (27), a safety valve (28), and an electric contact pressure meter are disposed at the upper part of the reaction vessel (1).

The reaction vessel (1) is formed by welding an upper head, a lower head and a cylinder body, and both the upper head and the lower head are elliptical.

### Advantages of the Invention

### Advantages

The invention has the following advantages:
1. in terms of structure:
   (a) since the annular feed pipe is disposed at the inner upper part of the vessel, the annular feed pipe communicates with the feed port and is provided at the bottom with the small discharge holes, the pressurized high-viscosity pure-chitosan spinning solution enters the annular feed pipe through the feed port and then is forced to flow out of the small discharge holes, and also the diameter of the small discharge holes is only 0.5-5 mm and the inner pressure of the degassing vessel is less than 3,000 Pa, the spinning solution falls freely under the gravity action and drops onto the umbrella-shaped diffusion plate, the air bubbles in the spinning solution are sheared when going through the small discharge holes, leading to the changes of the interfacial layer of the spinning solution, as a result, the air bubbles escape rapidly, thereby completing the first-stage degassing process by high-pressure separation shear.
   (b) after the first-stage degassing process, the pure-chitosan spinning solution uniformly drops on the umbrella-shaped diffusion plate, under the action of gravity and the action of inclination of the umbrella-shaped diffusion plate, the spinning solution flows from the inner edge to the outer edge of the umbrella-shaped diffusion plate to form a spinning solution film which increases the degassing area, under such a condition that the inner pressure of the degassing vessel is less than 3,000 Pa, a part of air bubbles escape; when the spinning solution flows to the outer edge of the umbrella-shaped diffusion plate, the spinning solution falls freely under the gravity action and drops to the bottom of the degassing vessel, during down-flow, the outer edge of the umbrella-shaped diffusion plate takes the shear action on the spinning solution, leading to the changes of the interfacial layer of the spinning solution, as a result, the air bubbles escape rapidly, thereby completing the second-stage degassing process by film-scraping shear.
   (c) Owing to the special structure that the degassing vessel of the present invention has the inner cylinder body and the stirring shaft with screw propeller, and the inner body wall of the upper part of the umbrella-shaped diffusion plate and the upper end closing cover are distributed with small liquid outlet holes, after the second-stage degassing process the pure-chitosan spinning solution is lifted up from the vessel bottom to the upper part of the inner cylinder body under the stirring action of the screw propeller, so that the pure-chitosan spinning solution only flows out of the small liquid outlet holes, achieving the effect of degassing process (a); when the spinning solution drops to the vessel bottom from the umbrella-shaped diffusion plate, the effect of degassing process (b) is achieved, as a result, the effects of both degassing process (a) and degassing process (b) are achieved in one step by the stirring-lifting device alone. Particularly, the problem in the prior art that the spinning solution at the bottom of the degassing vessel is not degassed can be solved. The device runs continuously and completes the high-efficiency high-quality degassing operation
2. in terms of actual degassing effect: in the degassing vessels of the same volume and sectional area, 6 tons of pure-chitosan spinning solution having 500,000 mpa·s viscosity can be fully degassed within 8 hours by the method of the present invention, while 6 tons of pure-chitosan spinning solution having 500,000 mpa·s viscosity can be fully degassed within 40-55 hours by the conventional degassing method, accordingly, the degassing efficiency of the present invention is increased by 5-7 times.

### Brief Description of the Drawings

### Figure Description

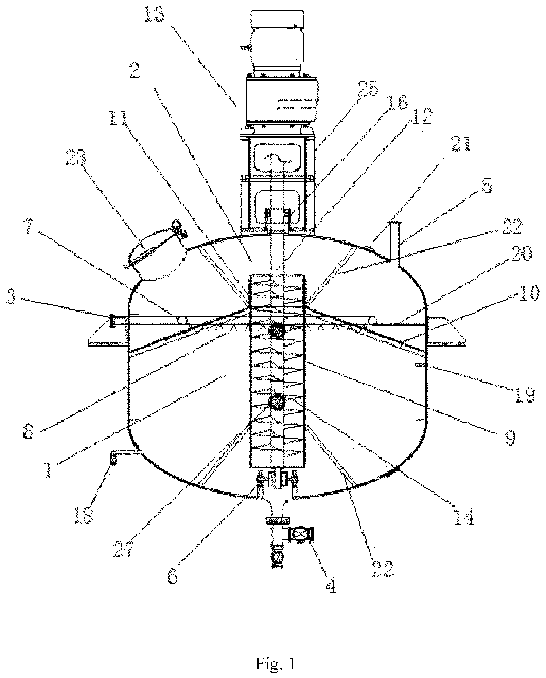

Fig. 1 is a structural schematic diagram of the present invention;

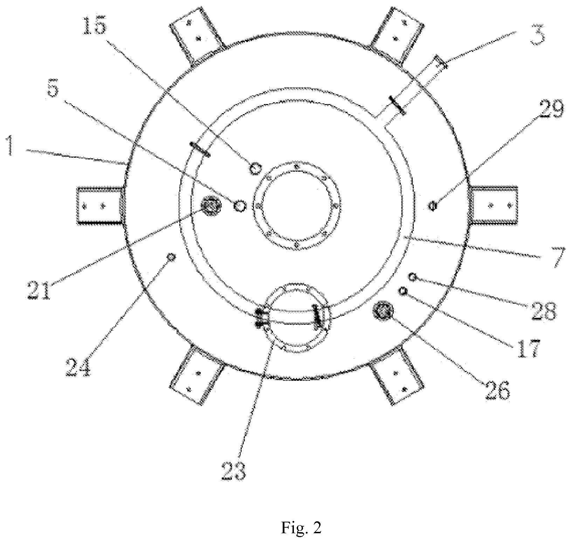

Fig. 2 is a plan view diagram of the present invention;
Detailed description of the reference numbers in specification:
reaction vessel --- 1, stirring device --- 2, feed port --- 3, discharge port --- 4, vacuum port --- 5, seat-mounted bearing --- 6 , annular feed pipe --- 7, small discharge hole --- 8, inner cylinder body --- 9, umbrella-shaped dispersion plate --- 10, small liquid outlet hole --- 11, stirring shaft --- 12, stirring power unit --- 13, screw propeller --- 14, vacuum relief port --- 15, mechanical sealing device --- 16, vacuum meter --- 17, sampling port --- 18, stopper --- 19, push rod --- 20, view window --- 21, support rod --- 22, manhole entrance --- 23, compressed air outlet port --- 24, power support --- 25, view mirror light --- 26, view mirror --- 27, safety valve --- 28, electric contact pressure meter 29

### Preferred Embodiments of the Invention

### Preferred Examples of the Invention

The present invention is illustrated more clearly with reference to the accompanying drawings 1, 2, and the described description is as follows:
A degassing device for a high-viscosity pure-chitosan spinning solution comprises a reaction vessel (1) and a stirring device (2), the reaction vessel (1) is formed by welding an upper head, a lower head and a cylinder body, both the upper head and the lower head are elliptical, and the thickness and constitution of stainless steel material of the upper/lower heads and the cylinder body are defined according to the pressure and pressure difference applied.

A feed port (3) is disposed at the upper part of the reaction vessel (1), the feed port (3) is located on the lateral side of the upper part of the reaction vessel (1), and preferably the feed port (3) is located on the lateral side of the upper half part of the reaction vessel (1) and on the same plane with an annular feed pipe (7) in the reaction vessel (1).

A discharge port (4) is disposed at the bottom of the reaction vessel (1), preferably the discharge port (4) is located in the bottom center of the reaction vessel (1) to facilitate the discharge of the degassed spinning solution, and optionally a sampling port (18) is disposed at the bottom to facilitate the observation of degassing situation of the spinning solution.

A vacuum port (5) is disposed at the upper port of the reaction vessel (1), and is preferably located on the upper head of the reaction vessel (1) to facilitate the escape of air from the reaction vessel (1).

A vacuum relief port (15) is disposed at the upper part of the reaction vessel (1), so that after the degassing operation is completed the inner pressure of the reaction vessel (1) becomes normal to facilitate the opening of the reaction vessel (1) and the discharge of the spinning solution as well.

A stopper (19) is disposed in the reaction vessel (1) to facilitate the observation of volume of the spinning solution in the reaction vessel (1).

A view window (21), a safety valve (28), an electrical contact pressure meter (29), a vacuum meter (17), a manhole entrance (23), a compressed air outlet (24), a view mirror light (26), and a view mirror (27) are disposed at the upper part of the reaction vessel (1).

The annular feed pipe (7) is fixed by a push rod (20) which is fixed on the inner wall of the reaction vessel (1) and located 150 mm above the umbrella-shaped dispersion plate (10), the annular feed pipe (7) communicates with the feed port (3), and small discharge holes (8) of 0.5-5 mm diameter are uniformly distributed on the pipe wall below the horizontal central plane of the annular feed pipe (7).

The inner cylinder body (9) is fixedly disposed in the center of the reaction vessel (1), and the inner cylinder body (9) is fixed within the reaction vessel (1) through upper and lower support rods (22). The upper cylinder opening of the inner cylinder body (9) is closed but open with respect to the lower cylinder opening, in practice, the upper cylinder opening of the inner cylinder body (9) is closed by a round plate on which small liquid outlet holes (11) are distributed, so as to prevent the spinning solution which is lifted up by a screw propeller (14) from directly flowing out of the upper cylinder opening and also to force the spinning solution to flow out of the small liquid outlet holes (11) in the round plate which is mounted to the upper cylinder opening, as a result, the solution drops off and the air bubbles escape, thereby achieving the degassing effect. In addition, owing to the rapid lift-up of the spinning solution and the drag force of the upper cylinder opening of the inner cylinder body, a larger pressure is applied to the lateral side of the upper cylinder body to force the spinning solution to flow out of the small liquid outlet holes (11), as a result, the solution drops off and the air bubbles escape, thereby achieving the degassing effect.

The umbrella-shaped dispersion plate (10) is fixedly disposed at the periphery of the upper half part of the inner cylinder body (9) such that the lower edge of the umbrella-shaped dispersion plate (10) is positioned above the effective solution level, and preferably the top of the umbrella-shaped dispersion plate (10) is fixedly disposed 300 mm above the upper cylinder opening of the inner cylinder body (9), so that the inner cylinder body (9) is divided by the umbrella-shaped dispersion plate (10) into upper and lower portions. The included angle (a) of axial lines of the umbrella-shaped dispersion plate (10) and the inner cylinder body (9) is as follows: a = 65°-80°. A gap of 100 mm-200 mm is formed between the outer periphery of the umbrella-shaped dispersion plate (10) and the inner wall of the reaction vessel (1). The umbrella-shaped dispersion plate (10) is polished.

The stirring power unit (13) comprises a motor, a speed reducer and a power support (25), the power support (25) is disposed on the outer top wall of the reaction vessel (1), and the speed reducer and the motor are disposed on the power support (25). The upper end of a stirring shaft (12) is mounted to the stirring power unit (13) such that the stirring shaft (12) and the output shaft of the speed reducer are engaged. The stirring shaft (12) passes through, from top to bottom, a seat-mounted bearing which is disposed in the power support (25), passes through a mechanical sealing device (16) used for sealing the assemblage gap between the reaction vessel (1) and the stirring shaft (12), and enters the reaction vessel (1) with the lower end being fixed on the seat-mounted bearing (6) at the bottom. As the upper and lower ends are fixed, the stirring shaft (12) runs more stably.

The seat-mounted bearing (6) is fixedly disposed in the bottom axle of the inner wall of the reaction vessel (1).

The stirring shaft (12) is superposed with the axial line of the inner cylinder body (9) and aligned with the discharge port (4).

A gap of 3 mm-5 mm is formed between the screw propeller (14) and the inner wall of the inner cylinder body (9).

### Industrial Applicability

It is well known that the larger viscocity of the pure chitosan spinning solution, the better performances of the chitosan fibers therefrom, including dry-breaking strength, breaking elongation and spinnability. At room temperature, the pure chitosan spinning solution degrades along with time, the viscocity is reduced, resulting the decrease in quality of pure chitosan fibers therefrom.

The device of the present invention greatly reduces the degradation of spinning solutions, realizes high-efficiency high-quality degassing operation of pure chitosan spinning solutions, and ensures the industrial production of high-quality pure chitosan fibers.

The degassing device for high-viscocity spinning solutions of the present invention has high degassing efficiency and good degassing effect, and avoids the formation of broken filaments, and the device can completely remove air bubbles in one step and is applicable to spinning solutions of a wide range of viscocity.

## Claims

1. A degassing device for high-viscosity pure-chitosan spinning solutions, comprising a reaction vessel (1) and a stirring device (2), a feed port (3) being disposed at the upper part of the reaction vessel (1), an annular feed pipe (7), and a discharge port (4) being disposed in the bottom center, **characterized in that**: a vacuum port (5) is formed at the upper part of the reaction vessel (1), the annular feed pipe (7) is fixedly disposed in the inner upper part of the reaction vessel (1), the annular feed pipe (7) communicates with the feed port (3), and 0.5-5 mm discharge holes (8) are distributed on the part below the horizontal central plane of the annular feed pipe (7), an inner cylinder body (9) is fixedly disposed in the center position of the reaction vessel (1), the upper cylinder opening of the inner cylinder body (9) is closed and the lower cylinder opening is open, an umbrella-shaped dispersion plate (10) is fixedly disposed at the periphery of the upper half part of the inner cylinder body (9), a gap is formed between the outer edge of the umbrella-shaped dispersion plate (10) and the inner wall of the reaction vessel (1), the annular feed pipe (7) is located above the umbrella-shaped dispersion plate(10), small liquid outlet holes (11) are distributed on the part of the inner cylinder body (9) above the umbrella-shaped dispersion plate (10), the stirring device (2) comprises a stirring shaft (12) with a screw propeller (14) and a stirring power unit (13), the upper end of the stirring shaft (12) is mounted to the stirring power unit (13), the stirring shaft (12) passes through a mechanical sealing device (16) and enters the reaction vessel (1) with the lower end being fixed on a seat-mounted bearing (6), the stirring shaft (12) is superposed with the axial line of the inner cylinder body (9), and a gap is formed between the inner wall of the inner cylinder body (9) and the screw propeller (14).

2. The degassing device for high-viscosity pure-chitosan spinning solutions of claim 1, **characterized in that**: the included angle of axial lines of the umbrella-shaped dispersion plate (10) and the inner cylinder body (9) is as follows: α =65° - 80°.

3. The degassing device for high-viscosity pure-chitosan spinning solutions of claim 1, **characterized in that**: the upper cylinder opening of the inner cylinder body (9) is closed by a round plate on which small liquid outlet holes (11) are distributed.

4. The degassing device for high-viscosity pure-chitosan spinning solutions of claim 2, **characterized in that**: the upper cylinder opening of the inner cylinder body (9) is closed by a round plate on which small liquid outlet holes (11) are distributed.

5. The degassing device for high-viscosity pure-chitosan spinning solutions of claim 4, **characterized in that**: the stirring shaft (12) is aligned with the discharge port (4).

6. The degassing device for high-viscosity pure-chitosan spinning solutions of claim 5, **characterized in that**: a sampling port (18) is formed at the lower part of the reaction vessel (1).

## Patentansprüche

1. Entgasungsvorrichtung für hochviskose Spinnlösungen aus reinem Chitosan, umfassend ein Reaktionsgefäß (1) und eine Rührvorrichtung (2), einen Einfüllanschluss (3), der am oberen Abschnitt des Reaktionsgefäßes (1) angeordnet ist, ein ringförmiges Einfüllrohr (7), und einen Auslassanschluss (4), der an der Bodenmitte angeordnet ist, **dadurch gekennzeichnet, dass**: ein Vakuumanschluss (5) am oberen Abschnitt des Reaktionsgefäßes (1) ausgebildet ist, das ringförmige Einfüllrohr (7) fest im inneren oberen Abschnitt des Reaktionsgefäßes (1) angeordnet ist, das ringförmige Einfüllrohr (7) mit dem Einfüllanschluss (3) in Kontakt ist und Auslasslöcher (8) von 0,5-5 mm am Abschnitt unter der horizontalen Mittenebene des ringförmigen Einfüllrohrs (7) verteilt sind, ein innerer Zylinderkörper (9) fest in der Mittenposition des Reaktionsgefäßes (1) angeordnet ist, die obere Zylinderöffnung des inneren Zylinderkörpers (9) geschlossen und die untere Zylinderöffnung geöffnet ist, eine schirmförmige Verteilerplatte (10) fest am Umfang des oberen Hälftenabschnitts des inneren Zylinderkörpers (9) angeordnet ist, ein Spalt zwischen der Außenkante des schirmförmigen Verteilerplatte (10) und der Innenwand des Reaktionsgefäßes (1) ausgebildet ist, das ringförmig Einfüllrohr (7) über der schirmförmigen Verteilerplatte (10) angeordnet ist, kleine Flüssigkeitsaustrittöffnungen (11) auf dem Teil des inneren Zylinderkörpers (9) über der schirmförmigen Verteilerplatte (10) verteilt sind, die Rührvorrichtung (2) einen Rührschaft (12) mit einem Schraubenpropeller (14) und eine Rührleistungseinheit (13) umfasst, das obere Ende des Rührschafts (12) an der Rührleistungseinheit (13) angebracht ist, der Rührschaft (12) durch eine mechanische Dichtungsvorrichtung (16) und in das Reaktionsgefäß (1) tritt, wobei das untere Ende an einem am Sitz angebrachten Lager (6) befestigt ist, der Rührschaft (12) eine Achsenlinie des inneren Zylinderkörpers (9) überlagert und zwischen der Innenwand des inneren Zylinderkörpers (9) und dem Schraubenpropeller (14) ein Spalt ausgebildet ist.

2. Entgasungsvorrichtung für hochviskose Spinnlösungen aus reinem Chitosan nach Anspruch 1, **dadurch gekennzeichnet, dass**: der enthaltene Winkel von Achsenlinien der schirmförmigen Verteilerplatte (10) und der innere Zylinderkörper (9) folgendermaßen ist: a = 65°-80°.

3. Entgasungsvorrichtung für hochviskose Spinnlösungen aus reinem Chitosan nach Anspruch 1, **dadurch gekennzeichnet, dass**: die obere Zylinderöffnung des inneren Zylinderkörpers (9) mit einer runden Platte geschlossen ist, in der kleine Flüssigkeitsaustrittslöcher (11) verteilt sind.

4. Entgasungsvorrichtung für hochviskose Spinnlösungen aus reinem Chitosan nach Anspruch 2, **dadurch gekennzeichnet, dass**: die obere Zylinderöffnung des inneren Zylinderkörpers (9) mit einer runden Platte geschlossen ist, in der kleine Flüssigkeitsaustrittslöcher (11) verteilt sind.

5. Entgasungsvorrichtung für hochviskose Spinnlösungen aus reinem Chitosan nach Anspruch 4, **dadurch gekennzeichnet, dass**: der Rührschaft (12) am Auslassanschluss (4) ausgerichtet ist.

6. Entgasungsvorrichtung für hochviskose Spinnlösungen aus reinem Chitosan nach Anspruch 5, **dadurch gekennzeichnet, dass**: ein Probenahmeanschluss (18) am unteren Teil des Reaktionsgefäßes (1) ausgebildet ist.

## Revendications

1. Dispositif de dégazage pour des solutions de filage de chitosane pur à haute viscosité, comprenant une cuve de réaction (1) et un dispositif d'agitation (2), un orifice d'alimentation (3) qui est disposé au niveau de la partie supérieure de la cuve de réaction (1), un tuyau d'alimentation annulaire (7), et un orifice d'évacuation (4) qui est disposé au centre du fond, **caractérisé en ce que** : un orifice de vide (5) est formé au niveau de la partie supérieure de la cuve de réaction (1), le tuyau d'alimentation annulaire (7) est disposé de manière fixe dans la partie supérieure interne de la cuve de réaction (1), le tuyau d'alimentation annulaire (7) communique avec l'orifice d'alimentation (3), et des trous d'évacuation de 0,5-5 mm (8) sont répartis sur la partie au-dessous du plan central horizontal du tuyau d'alimentation annulaire (7), un corps cylindrique interne (9) est disposé de manière fixe dans la position centrale de la cuve de réaction (1), l'ouverture cylindrique supérieure du corps cylindrique interne (9) est fermée et l'ouverture cylindrique inférieure est ouverte, une plaque de dispersion en forme de parapluie (10) est disposée de manière fixe à la périphérie de la moitié supérieure du corps cylindrique interne (9), un intervalle est formé entre le bord externe de la plaque de dispersion en forme de parapluie (10) et la paroi interne de la cuve de réaction (1), le tuyau d'alimentation annulaire (7) est situé au-dessus de la plaque de dispersion en forme de parapluie (10), de petits trous de sortie de liquide (11) sont répartis sur la partie du corps cylindrique interne (9) au-dessus de la plaque de dispersion en forme de parapluie (10), le dispositif d'agitation (2) comprend une tige d'agitation (12) comportant une hélice (14) et une unité motrice d'agitation (13), l'extrémité supérieure de la tige d'agitation (12) est montée sur l'unité motrice d'agitation (13), la tige d'agitation (12) passe à travers un dispositif d'étanchéité mécanique (16) et entre dans la cuve de réaction (1) avec l'extrémité inférieure fixée sur un support monté sur siège (6), la tige d'agitation (12) est superposée avec la ligne axiale du corps cylindrique interne (9), et un intervalle est formé entre la paroi interne du corps cylindrique interne (9) et l'hélice (14).

2. Dispositif de dégazage pour des solutions de filage de chitosane pur à haute viscosité selon la revendication 1, **caractérisé en ce que** : l'angle inclus de lignes axiales de la plaque de dispersion en forme de parapluie (10) et du corps cylindrique interne (9) est comme suit : α = 65° - 80°.

3. Dispositif de dégazage pour des solutions de filage de chitosane pur à haute viscosité selon la revendication 1, **caractérisé en ce que** : l'ouverture cylindrique supérieure du corps cylindrique interne (9) est fermée par une plaque ronde sur laquelle de petits trous de sortie de liquide (11) sont répartis.

4. Dispositif de dégazage pour des solutions de filage de chitosane pur à haute viscosité selon la revendication 2, **caractérisé en ce que** : l'ouverture cylindrique supérieure du corps cylindrique interne (9) est fermée par une plaque ronde sur laquelle de petits trous de sortie de liquide (11) sont répartis.

5. Dispositif de dégazage pour des solutions de filage de chitosane pur à haute viscosité selon la revendication 4, **caractérisé en ce que** : la tige d'agitation (12) est alignée avec l'orifice d'évacuation (4).

6. Dispositif de dégazage pour des solutions de filage de chitosane pur à haute viscosité selon la revendication 5, **caractérisé en ce que** : un orifice d'échantillonnage (18) est formé au niveau de la partie inférieure de la cuve de réaction (1).
